# EUROPÄISCHE PATENTSCHRIFT

(11) **EP 4 497 310 B1**
(45) Veröffentlichungstag und Bekanntmachung des Hinweises auf die Patenterteilung: **20.05.2026**
(21) Anmeldenummer: 24176960.3
(22) Anmeldetag: 21.05.2024
(51) Int. Cl.: A01B 69/04, B60W 50/08, B60W 60/00, B62D 15/02

(54) **ARBEITSMASCHINE MIT AUTOMATISCHER AKTIVIERUNG EINES LENKSYSTEMS**
WORK MACHINE WITH AUTOMATIC ACTIVATION OF STEERING SYSTEM
MACHINE DE TRAVAIL AVEC ACTIVATION AUTOMATIQUE D'UN SYSTÈME DE DIRECTION

(30) Priorität: 28.07.2023 DE 102023120122
(43) Veröffentlichungstag der Anmeldung: 29.01.2025
(73) Patentinhaber: CLAAS E-Systems GmbH, 49201 Dissen (DE)
(72) Erfinder: Hemsen, Moritz, 59872 Meschede (DE); Hagedorn, Simon, 49219 Glandorf (DE)
(74) Vertreter: CLAAS Gruppe

(56) Entgegenhaltungen:
- EP-A2- 3 847 879
- EP-B1- 3 683 623
- DE-B4- 102013 010 928
- DE-B4- 102016 210 452

## Beschreibung

Die vorliegende Erfindung betrifft eine landwirtschaftliche Arbeitsmaschine zum landwirtschaftlichen Einsatz auf einem landwirtschaftlichen Feld, wobei diese Arbeitsmaschine ein Lenkrad für einen Fahrer zur manuellen Lenkung der landwirtschaftlichen Arbeitsmaschine aufweist.

In der EP 3 730 347 A1 kann der Fahrer ausgehend von der manuellen Lenkung der landwirtschaftlichen Arbeitsmaschine durch eine Betätigung eines Schalter am Lenkrad einen automatische Lenkung der landwirtschaftlichen Arbeitsmaschine aktivieren.

In der EP 3 847 879 A2 wird mit Hilfe eines am Lenkrad einer landwirtschaftlichen Arbeitsmaschine angebrachten Sensors erkannt, ob der Fahrer seine Hand vom Lenkrad genommen hat.

Der vorliegenden Erfindung liegt die Aufgabe zugrunde, eine verbesserte landwirtschaftlichen Arbeitsmaschine anzugeben, die für den Fahrer die Aktivierung einer automatischen Lenkung vereinfacht.

Diese Aufgabe wird erfindungsgemäß durch die Gegenstände der unabhängigen Ansprüche gelöst. Vorteilhafte Ausführungsformen sind Gegenstand der abhängigen Ansprüche. Die vorliegende Erfindung beruht auf dem allgemeinen Gedanken, dass eine automatische Lenkung der landwirtschaftlichen Arbeitsmaschine in Abhängigkeit eines Lenkradberührungssignals einer Sensorvorrichtung aktiviert und/oder deaktiviert wird.

Die erfindungsgemäße landwirtschaftliche Arbeitsmaschine ist für einen landwirtschaftlichen Einsatz auf einem landwirtschaftlichen Feld, insbesondere zum Ernten von Erntegut, ausgebildet. Diese landwirtschaftliche Arbeitsmaschine weist ein Lenkrad auf, mit dem ein Fahrer, der z.B. in einer Fahrerkabine der landwirtschaftlichen Arbeitsmaschine sitzt, eine manuelle Lenkung der landwirtschaftliche Arbeitsmaschine vornehmen kann. Die landwirtschaftliche Arbeitsmaschine kann derart ausgebildet sein, dass der Fahrer mittels des Lenkrads eine Vorderradlenkung, Hinterradlenkung und/oder eine Allradlenkung der landwirtschaftliche Arbeitsmaschine manuell bewirken kann.

Die landwirtschaftliche Arbeitsmaschine weist wenigstens eine Sensorvorrichtung auf, die dazu vorgesehen und eingerichtet ist, zu ermitteln, insbesondere sensortechnisch zu ermitteln, ob der Fahrer das Lenkrad, insbesondere mit einer Hand, berührt, und diesbezüglich ein Lenkradberührungssignal zu erzeugen. Beispielsweise kann das Lenkradberührungssignal einen Nullwert, also eine 0, ausbilden, wenn der Fahrer das Lenkrad nicht berührt, während dieses Lenkradberührungssignal einen anderen Wert als den Nullwert aufweist, wenn der Fahrer das Lenkrad berührt.

Zusätzlich weist die landwirtschaftliche Arbeitsmaschine eine Einstellvorrichtung auf, die dazu vorgesehen und eingerichtet ist, eine automatische Lenkung der landwirtschaftlichen Arbeitsmaschine in Abhängigkeit des Lenkradberührungssignals der Sensorvorrichtung zu aktivieren, insbesondere mit einem entsprechenden Signal zu aktivieren, wenn gemäß dem Lenkradberührungssignal das Lenkrad vom Fahrer unberührt ist. Während einer automatischen Lenkung der landwirtschaftliche Arbeitsmaschine ist eine manuelle Lenkung seitens des Fahrers nicht erforderlich.

Hierdurch wird eine weitere Automatisierung der landwirtschaftlichen Feldarbeit mit der landwirtschaftlichen Arbeitsmaschine ermöglicht, da keine manuelle Aktivierung der automatischen Lenkung seitens des Fahrers erforderlich ist. Somit wird diese Aktivierung der automatischen Lenkung für den Fahrer vereinfacht. Außerdem wird sichergestellt, dass diese Aktivierung der automatischen Lenkung nicht vergessen und/oder aufgrund von Unaufmerksamkeit des Fahrers verpasst wird, sodass stets sichergestellt wird, dass die landwirtschaftlichen Arbeitsmaschine entlang vorgegebener Fahrspuren auf dem landwirtschaftlichen Feld optimal fährt.

Die Einstellvorrichtung kann als Steuer- und/oder Regelvorrichtung ausgebildet sein, die eine Einstellung durch eine Steuerung und/oder Regelung der landwirtschaftlichen Arbeitsmaschine, insbesondere von Komponenten der landwirtschaftlichen Arbeitsmaschine, bewirkt. Die Einstellvorrichtung kann eine Rechenvorrichtung, insbesondere eine computerbasierte Rechenvorrichtung, und einen Datenspeicher, insbesondere computerlesbaren Datenspeicher, aufweisen. Unter eingerichtet kann zu verstehen sein, dass die Einstellvorrichtung dazu ausgebildet und/oder programmiert ist. Die Einstellvorrichtung, insbesondere die Rechenvorrichtung, kann datentechnisch kommunizierend mit dem Datenspeicher, mit der Sensorvorrichtung und/oder mit wenigstens einem Satelliten, insbesondere mehreren Satelliten, verbunden sein. Diese datentechnische kommunizierende Verbindung kann kabelgebunden und/oder kabellos ausgebildet sein.

Bei einer vorteilhaften Weiterbildung der erfindungsgemäßen Lösung ist vorgesehen, dass die Einstellvorrichtung dazu vorgesehen und eingerichtet ist, die automatische Lenkung zu deaktivieren, wenn gemäß dem Lenkradberührungssignal das Lenkrad vom Fahrer berührt wird. Hierdurch kann der Fahrer schnell und einfach einer automatischen Lenkung entgegenwirken, falls beispielweise plötzlich, also planungstechnisch unerwartet, ein lebendes Hindernis auf dem landwirtschaftlichen Feld erscheint.

Bei einer vorteilhaften Weiterbildung der erfindungsgemäßen Lösung ist vorgesehen, dass die Sensorvorrichtung, insbesondere mehrere Sensorvorrichtungen, am und/oder im Lenkrad angeordnet ist. Hierdurch wird der Einbau der Sensorvorrichtung vereinfacht und die erforderlichen Kosten für diese Sensorvorrichtung reduziert. Außerdem können nachträglich entsprechende Lenkräder mit einer solchen Sensorvorrichtung ausgerüstet werden, die ursprünglich eine solche Sensorvorrichtung nicht hatten.

Erfindungsgemäss ist vorgesehen, dass die Sensorvorrichtung wenigstens einen Induktionssensor aufweist.

Bei einer vorteilhaften Weiterbildung der erfindungsgemäßen Lösung ist vorgesehen, dass die Einstellvorrichtung dazu vorgesehen und eingerichtet ist, die landwirtschaftliche Arbeitsmaschine während der automatischen Lenkung in Abhängigkeit satellitenbasierter Positionsinformationen derart einzustellen, dass die landwirtschaftliche Arbeitsmaschine innerhalb des landwirtschaftlichen Feldes entlang vorgegebener Fahrspuren fährt.

Die Fahrspuren bezüglich des landwirtschaftlichen Feldes, entlang derer die landwirtschaftlichen Arbeitsmaschine fahren soll, können schon vorgegeben, insbesondere datentechnisch hinterlegt, sein, bevor sich die landwirtschaftlichen Arbeitsmaschine auf dem landwirtschaftlichen Feld befindet.

Die satellitenbasierte Informationen können jeweils mittels einer Positionsbestimmungseinrichtung zur satellitenbasierten Erfassung einer Position einer landwirtschaftlichen Arbeitsmaschine bezüglich des landwirtschaftlichen Feldes erfasst worden sein. Die Positionsbestimmungseinrichtung kann zur Positionsbestimmung mittels Satellitennavigationssignalen ausgebildet und/oder programmiert sein, um beispielsweise Positionsdaten bereitzustellen. Hierbei kann wenigstens eine Satellitenvorrichtung zur Positionsbestimmung der landwirtschaftlichen Arbeitsmaschine bezüglich landwirtschaftlichen Feldes eingesetzt werden. Die Satellitenvorrichtung kann einen und/oder mehrere GNSS-Satelliten umfassen. Die Satellitenvorrichtung kann NAVSTAR-GPS-, GLONASS-, Galileo, Beidou-, GPS- und/oder Galileo-Satelliten umfassen. Die Positionsbestimmungseinrichtung kann zur Positionsbestimmung gemäß des RTK-(Real-Time-Kinematic-) Verfahrens ausgebildet und/oder programmiert sein, bei der ergänzend zu den Satellitensignalen ein sogenanntes RTK-Signal eingesetzt wird, um die Position der landwirtschaftlichen Arbeitsmaschine auf dem landwirtschaftlichen Feld zu ermitteln. Das RTK-Signal kann von einer stationären Bodenstation erzeugt werden. Das RTK-Signal kann von einem außerhalb der landwirtschaftlichen Arbeitsmaschine ausgebildeten computerbasierten Rechenzentrum erzeugt werden, welches Korrekturdaten computerbasiert berechnet und diese Korrekturdaten der Einstellvorrichtung der landwirtschaftlichen Arbeitsmaschine über Mobilfunk übermittelt. Hierbei kann die stationäre Bodenstation und/oder das computerbasierte Rechenzentrum außerhalb des landwirtschaftlichen Feldes angeordnet sein.

Bei einer vorteilhaften Weiterbildung der erfindungsgemäßen Lösung ist vorgesehen, dass die Einstellvorrichtung dazu vorgesehen und eingerichtet ist, nach dem Aktivieren der automatischen Lenkung eine nächstliegende vorgegebene Fahrspur zu ermitteln und die landwirtschaftliche Arbeitsmaschine derart einzustellen, dass die landwirtschaftliche Arbeitsmaschine diese ermittelte nächstliegende vorgegebene Fahrspur anfährt und dann entlang dieser ermittelten nächstliegenden vorgegebenen Fahrspur fährt. Dies kann beispielweise vorteilhaft sein, wenn der Fahrer aufgrund des Erscheinens eines lebendes Hindernis von der vorgegebene Fahrspur kurzzeitig abweichend musste.

Bei einer vorteilhaften Weiterbildung der erfindungsgemäßen Lösung ist vorgesehen, dass die Einstellvorrichtung dazu vorgesehen und eingerichtet ist, die landwirtschaftliche Arbeitsmaschine derart einzustellen, dass die landwirtschaftliche Arbeitsmaschine die ermittelte nächstliegende vorgegebene Fahrspur entlang eines landtechnisch zulässigen Fahrweges und/oder mit einer minimalen Fahrweglänge anfährt.

Bei einer vorteilhaften Weiterbildung der erfindungsgemäßen Lösung ist vorgesehen, dass die Einstellvorrichtung dazu vorgesehen und eingerichtet ist, eine Fahrtrichtung und/oder eine Fahrgeschwindigkeit der landwirtschaftlichen Arbeitsmaschine zu ermitteln, insbesondere sensortechnisch und/oder einstellungstechnisch zu ermitteln, und die nächstliegende vorgegebene Fahrspur in Abhängigkeit der ermittelten Fahrtrichtung und/oder der ermittelten Fahrgeschwindigkeit zu ermitteln.

Bei einer vorteilhaften Weiterbildung der erfindungsgemäßen Lösung ist vorgesehen, dass die Einstellvorrichtung dazu vorgesehen und eingerichtet ist, die nächstliegende vorgegebene Fahrspur in Abhängigkeit der satellitenbasierter Positionsinformation zu ermitteln.

Bei einer vorteilhaften Weiterbildung der erfindungsgemäßen Lösung ist vorgesehen, dass die Einstellvorrichtung dazu vorgesehen und eingerichtet ist, nach dem Aktivieren der automatischen Lenkung bezüglich der vorgegebenen Fahrspuren zu ermitteln, welche dieser vorgegebenen Fahrspuren von der landwirtschaftlichen Arbeitsmaschine noch nicht befahren wurden, und die landwirtschaftliche Arbeitsmaschine derart einzustellen, dass die landwirtschaftliche Arbeitsmaschine entlang dieser noch nicht befahrenen vorgegebenen Fahrspuren entlangfährt. Die Einstellvorrichtung kann dazu vorgesehen und eingerichtet sein, dass während der gesamten Fahrt der landwirtschaftlichen Arbeitsmaschine auf dem landwirtschaftlichen Feld satellitenbasierte Positionsinformation datentechnisch gesammelt werden, um zu ermöglichen, zu ermitteln, welche Teile dieser vorgegebenen Fahrspuren von der landwirtschaftlichen Arbeitsmaschine noch nicht befahren wurden.

Bei einer vorteilhaften Weiterbildung der erfindungsgemäßen Lösung ist vorgesehen, dass die Einstellvorrichtung dazu vorgesehen und eingerichtet ist, nach dem Aktivieren der automatischen Lenkung eine nächstliegende vorgegebene Fahrspur in Abhängigkeit von Feldgrenzen des landwirtschaftlichen Feld zu ermitteln.

Bei einer vorteilhaften Weiterbildung der erfindungsgemäßen Lösung ist vorgesehen, dass das landwirtschaftlichen Feld wenigstens einen Feldbereich und wenigstens einen Vorgewendebereich aufweist, wobei die vorgegebenen Fahrspuren wenigstens eine wenigstens eine Fahrspur im Feldbereich und/oder wenigstens eine Vorgewendefahrspur im Vorgewendebereich aufweisen. Im Feldbereich können mehrere voneinander beabstandete Fahrspuren vorgesehen sein, wobei zwei dieser Fahrspuren mittels wenigstens einer Vorgewendefahrspur miteinander verbunden sind.

Bei einer vorteilhaften Weiterbildung der erfindungsgemäßen Lösung ist vorgesehen, dass die landwirtschaftliche Arbeitsmaschine ein selbstfahrender Mähdrescher oder ein selbstfahrender Feldhäcksler oder ein Traktor ist.

Ferner betrifft die Erfindung die einstellungstechnische Verwendung eines Lenkradberührungssignals, welches mittels einer Sensorvorrichtung einer landwirtschaftlichen Arbeitsmaschine, insbesondere einer erfindungsgemäßen landwirtschaftlichen Arbeitsmaschine, erzeugt, insbesondere sensortechnisch erzeugt, wurde, um eine automatische satellitenbasierte Lenkung dieser landwirtschaftlichen Arbeitsmaschine zu aktivieren, falls gemäß dem Lenkradberührungssignal ein Lenkrad der landwirtschaftlichen Arbeitsmaschine von einem Fahrer unberührt ist. Hierbei kann die erfindungsgemäße landwirtschaftliche Arbeitsmaschine zuvor als auch nachfolgend beschriebene Merkmale aufweisen.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der Patentansprüche zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine Draufsicht auf die erfindungsgemäße landwirtschaftliche Arbeitsmaschine während einer Vorgewendefahrt im Vorgewendebereich eines landwirtschaftlichen Feldes, und
- Fig. 2: eine perspektivische Seitenansicht auf eine erfindungsgemäße landwirtschaftliche Arbeitsmaschine während einer Geradeausfahrt in einem Feldbereich des landwirtschaftlichen Feldes.

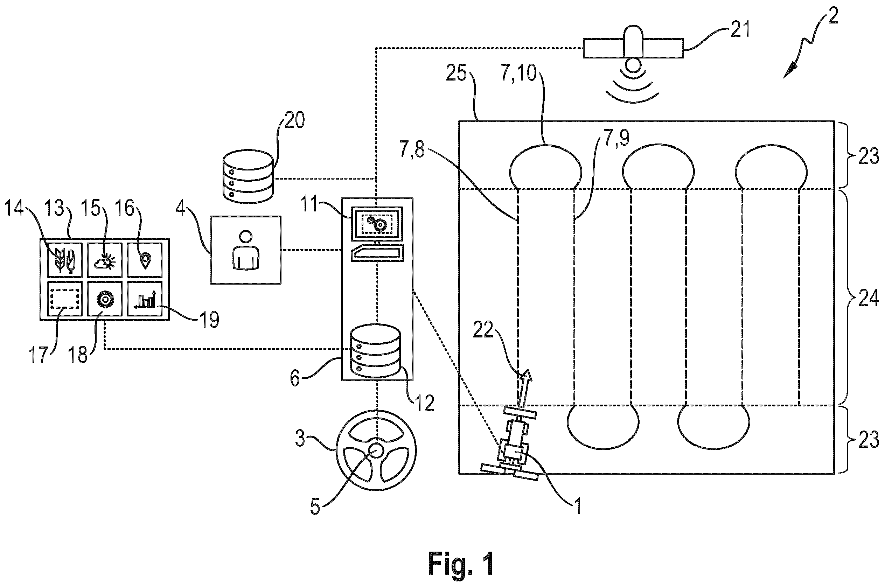

Die Fig. 1 zeigt eine Draufsicht auf eine erfindungsgemäße landwirtschaftliche Arbeitsmaschine 1 während eines landwirtschaftlichen Einsatzes auf einem landwirtschaftlichen Feld 2, welches von Feldgrenzen 25 begrenzt ist, innerhalb derer wenigstens ein Feldbereich 24 und wenigstens ein Vorgewendebereich 23 ausgebildet ist.

Die landwirtschaftliche Arbeitsmaschine 1 ist beispielhaft als Traktor mit einem frontseitigen Anbaugerät und zwei hinterseitigen Anbaugeräten dargestellt. Alternativ hierzu kann diese landwirtschaftliche Arbeitsmaschine 1 als selbstfahrender Mähdrescher oder als selbstfahrender Feldhäcksler ausgebildet sein.

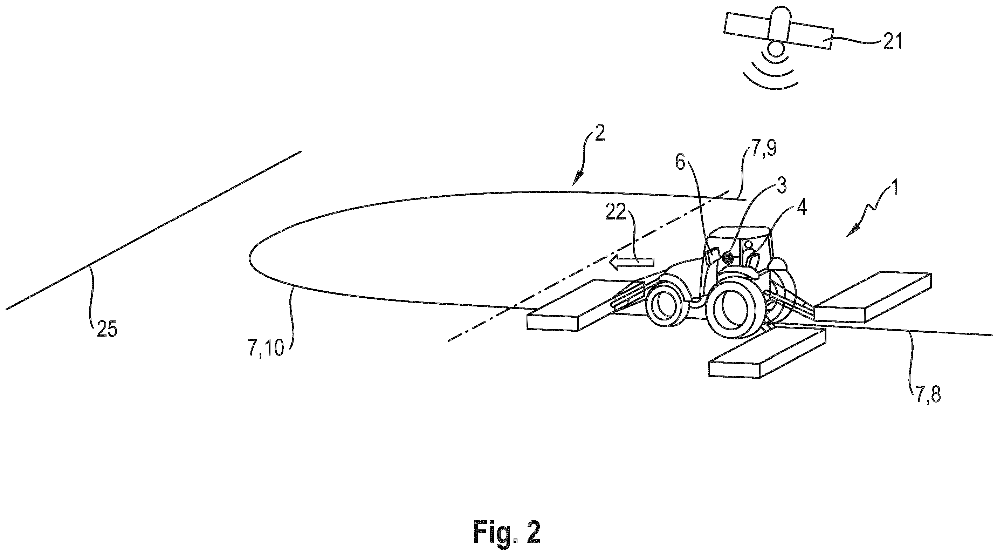

Die landwirtschaftliche Arbeitsmaschine 1 weist, wie in der Fig. 2 angedeutet, eine Fahrerkabine für einen Fahrer 4 auf, wobei in dieser Fahrerkabine wenigstens ein Lenkrad 3 für eine manuelle Lenkung angeordnet ist. Der Fahrer 4 kann mit diesem Lenkrad 3 die Fahrtrichtung 22 der landwirtschaftlichen Arbeitsmaschine 1 während der Fahrt manuell anpassen.

Die landwirtschaftliche Arbeitsmaschine 1 weist wenigstens eine Sensorvorrichtung 5 auf, die dazu vorgesehen und eingerichtet ist, zu ermitteln, ob der Fahrer 4 das Lenkrad 3 mit einer Hand berührt und diesbezüglich ein Lenkradberührungssignal zu erzeugen. Diese Sensorvorrichtung 5 kann am und/oder im Lenkrad 3 angeordnet sein. Beispielsweise kann dieses Lenkradberührungssignal einen Nullwert, also eine 0, ausbilden, wenn der Fahrer 4 das Lenkrad 3 überhaupt nicht berührt, während das Lenkradberührungssignal einen anderen Wert als den Nullwert aufweist, wenn der Fahrer 4 das Lenkrad 3 mit wenigstens einer Hand berührt.

Die landwirtschaftliche Arbeitsmaschine 1 weist eine Einstellvorrichtung 6 auf, die dazu vorgesehen und eingerichtet ist, eine automatische Lenkung der landwirtschaftlichen Arbeitsmaschine 1 in Abhängigkeit des Lenkradberührungssignals der Sensorvorrichtung 5 zu aktivieren und/oder durchzuführen, wenn gemäß dem Lenkradberührungssignal das Lenkrad 3 vom Fahrer 4 unberührt ist.

Hierdurch wird eine weitere Automatisierung der landwirtschaftlichen Feldarbeit mit der landwirtschaftlichen Arbeitsmaschine 1 ermöglicht, da keine manuelle Aktivierung der automatischen Lenkung seitens des Fahrers 4 erforderlich ist. Somit wird diese Aktivierung der automatischen Lenkung für den Fahrer 4 vereinfacht. Außerdem wird sichergestellt, dass diese Aktivierung der automatischen Lenkung nicht vergessen und/oder aufgrund von Unaufmerksamkeit des Fahrers 4 verpasst wird, sodass stets sichergestellt wird, dass die landwirtschaftlichen Arbeitsmaschine 1 entlang vorgegebener Fahrspuren 7, 8, 9, 10 auf dem landwirtschaftlichen Feld 2 optimal fährt.

Die Einstellvorrichtung 6 kann eine Rechenvorrichtung 11 und einen internen Datenspeicher 12 innerhalb der landwirtschaftlichen Arbeitsmaschine 1 und/oder einen externen Datenspeicher 20 außerhalb der landwirtschaftlichen Arbeitsmaschine 1 aufweisen. Die Einstellvorrichtung 6, insbesondere die Rechenvorrichtung 11, kann datentechnisch kommunizierend mit dem Datenspeicher 11 und/oder 20, mit der Sensorvorrichtung 5 und/oder mit wenigstens einem Satelliten 21 verbunden sein.

Messtechnisch erfasste Daten können in Form eines Datensatzes 13 im internen Datenspeicher 12 und/oder im weiteren externen Datenspeicher 20 hinterlegt sein und Erntegutinformationen 14, Wetterinformationen 15, Standortinformationen 16, Feldinformationen 17, Arbeitsmaschinenparameter 18 und/oder geplante Fahrspuren 19 betreffen. Die geplanten Fahrspuren 19 sind in der Fig. 1 und Fig. 2 innerhalb der Feldgrenzen 25 des landwirtschaftlichen Feldes 2 mit den Fahrspuren 7, 8, 9, 10 angedeutet dargestellt. Die Einstellvorrichtung 6 kann dazu vorgesehen und eingerichtet sein, die landwirtschaftlichen Arbeitsmaschine 1 während der aktivierten automatischen Lenkung in Abhängigkeit des Datensatzes 13 einzustellen.

In der Fig. 1 ist angedeutet dargestellt, dass der Fahrer über den unteren Vorgewendebereich 23 auf das landwirtschaftliche Feld 2 geführt hat und in diesem dargestellten Moment das Lenkrad 3 vollständig losgelassen hat, sodass die automatischen Lenkung aktiviert wurde. Die Einstellvorrichtung 3 ist dazu vorgesehen und eingerichtet, nach diesem Aktivieren der automatischen Lenkung eine nächstliegende vorgegebene Fahrspur 7 zu ermitteln. In dem beispielhaften Fall der Fig. 1 ist diese nächstliegende vorgegebene Fahrspur 7 die Fahrspur 8 des Feldbereiches 24.

Hierfür kann die Einstellvorrichtung 3 dazu vorgesehen und eingerichtet sein, die Fahrtrichtung 22 und/oder eine Fahrgeschwindigkeit der landwirtschaftlichen Arbeitsmaschine 1 und/oder die satellitenbasierte Positionsinformation mittels des Satelliten 21 zu erfassen und darauf basierend die nächstliegende vorgegebene Fahrspur 7, 8 zu ermitteln.

Die Einstellvorrichtung 3 kann dazu vorgesehen und eingerichtet sein, nach dem Aktivieren der automatischen Lenkung bezüglich der vorgegebenen Fahrspuren 7, 8, 9, 10 zu ermitteln, welche dieser vorgegebenen Fahrspuren 7, 8, 9, 10 von der landwirtschaftlichen Arbeitsmaschine 1 noch nicht befahren wurden, und die landwirtschaftliche Arbeitsmaschine 1 derart einzustellen, dass diese entlang dieser noch nicht befahrenen vorgegebenen Fahrspuren 7, 8, 9, 10 entlangfährt. Hierfür kann die Einstellvorrichtung 6 dazu vorgesehen und eingerichtet sein, dass während der gesamten Fahrt der landwirtschaftlichen Arbeitsmaschine 1 auf dem landwirtschaftlichen Feld 2 satellitenbasierte Positionsinformation mittels eines Satelliten 21 datentechnisch gesammelt werden, um zu ermöglichen, zu ermitteln, welche Teile dieser vorgegebenen Fahrspuren 7, 8, 9, 10 von der landwirtschaftlichen Arbeitsmaschine 1 noch nicht befahren wurden.

In der Fig. 2 ist angedeutet dargestellt, dass sich die landwirtschaftliche Arbeitsmaschine 1 im Feldbereich 24 befindet und fast die vorgegebene Fahrspur 7, 8 befahren hat. Weiterhin hat der Fahrer 4 seine Hände nicht an dem Lenkrad 3, sodass sich landwirtschaftliche Arbeitsmaschine 1 immer noch automatischen Lenkungsmodus befindet.

Nachdem die landwirtschaftliche Arbeitsmaschine 1 das Ende der ersten Fahrspur 7, 8 erreicht, bewirkt die Einstellvorrichtung 3, dass automatisch innerhalb des Vorgewendebereiches 23 entlang vorgegebener Vorgewendefahrspur 7, 10 fährt, um anschließend entlang der zweiten Fahrspur 7, 9 zu fahren, die beabstandet zur ersten Fahrspur 7, 8 angeordnet ist.

### Bezugszeichenliste

- 1: landwirtschaftliche Arbeitsmaschine
- 2: landwirtschaftliches Feld
- 3: Lenkrad
- 4: Fahrer
- 5: Sensorvorrichtung
- 6: Einstellvorrichtung
- 7: Fahrspur
- 8: Erste Fahrspur
- 9: Zweite Fahrspur
- 10: Vorgewendefahrspur
- 11: Rechenvorrichtung
- 12: Datenspeicher
- 13: Datensatz
- 14: Erntegutinformationen
- 15: Wetterinformationen
- 16: Standortinformationen
- 17: Feldinformationen
- 18: Arbeitsmaschinenparameter
- 19: geplante Fahrspuren
- 20: externer Datenspeicher
- 21: Satellit
- 22: Fahrtrichtung
- 23: Vorgewendebereich
- 24: Feldbereich
- 25: Feldgrenze

## Patentansprüche

1. Landwirtschaftliche Arbeitsmaschine (1) zum landwirtschaftlichen Einsatz auf einem landwirtschaftlichen Feld (2),
- mit einem Lenkrad (3) für einen Fahrer (4) zur manuellen Lenkung der landwirtschaftlichen Arbeitsmaschine (1),
- wobei die landwirtschaftliche Arbeitsmaschine (1) wenigstens eine Sensorvorrichtung (5) aufweist, die dazu vorgesehen und eingerichtet ist, zu ermitteln, ob der Fahrer (4) das Lenkrad (3) berührt, und diesbezüglich ein Lenkradberührungssignal zu erzeugen, und
- wobei die landwirtschaftliche Arbeitsmaschine (1) eine Einstellvorrichtung (6) aufweist, die dazu vorgesehen und eingerichtet ist, eine automatische Lenkung der landwirtschaftlichen Arbeitsmaschine (1) in Abhängigkeit des Lenkradberührungssignals der Sensorvorrichtung (5) zu aktivieren, wenn gemäß dem Lenkradberührungssignal das Lenkrad (3) vom Fahrer (4) unberührt ist,
**dadurch gekennzeichnet, dass**
die Sensorvorrichtung (5) wenigstens einen Induktionssensor aufweist.

2. Landwirtschaftliche Arbeitsmaschine (1) nach Anspruch 1,
**dadurch gekennzeichnet,**
**dass** die Einstellvorrichtung (6) dazu vorgesehen und eingerichtet ist, die automatische Lenkung zu deaktivieren, wenn gemäß dem Lenkradberührungssignal das Lenkrad (3) vom Fahrer (4) berührt wird.

3. Landwirtschaftliche Arbeitsmaschine (1) nach einem der vorhergehenden Ansprüche,
**dadurch gekennzeichnet,**
**dass** die Sensorvorrichtung (5) am und/oder im Lenkrad (3) angeordnet ist.

4. Landwirtschaftliche Arbeitsmaschine (1) nach einem der vorhergehenden Ansprüche,
**dadurch gekennzeichnet,**
**dass** die Einstellvorrichtung (6) dazu vorgesehen und eingerichtet ist, die landwirtschaftliche Arbeitsmaschine (1) während der automatischen Lenkung in Abhängigkeit satellitenbasierter Positionsinformationen derart einzustellen, dass die landwirtschaftliche Arbeitsmaschine (1) innerhalb des landwirtschaftlichen Feldes (2) entlang vorgegebener Fahrspuren (7, 8, 9, 10) fährt.

5. Landwirtschaftliche Arbeitsmaschine (1) nach einem der vorhergehenden Ansprüche,
**dadurch gekennzeichnet,**
**dass** die Einstellvorrichtung (6) dazu vorgesehen und eingerichtet ist, nach dem Aktivieren der automatischen Lenkung eine nächstliegende vorgegebene Fahrspur (7, 8, 9, 10) zu ermitteln und die landwirtschaftliche Arbeitsmaschine (1) derart einzustellen, dass die landwirtschaftliche Arbeitsmaschine (1) diese ermittelte nächstliegende vorgegebene Fahrspur (7, 8, 9, 10) anfährt und dann entlang dieser ermittelten nächstliegenden vorgegebenen Fahrspur (7, 8, 9, 10) fährt.

6. Landwirtschaftliche Arbeitsmaschine (1) nach Anspruch 4 oder 5,
**dadurch gekennzeichnet,**
**dass** die Einstellvorrichtung (6) dazu vorgesehen und eingerichtet ist, die landwirtschaftliche Arbeitsmaschine (1) derart einzustellen, dass die landwirtschaftliche Arbeitsmaschine (1) die ermittelte nächstliegende vorgegebene Fahrspur (7, 8, 9, 10) entlang eines landtechnisch zulässigen Fahrweges und/oder mit einer minimalen Fahrweglänge anfährt.

7. Landwirtschaftliche Arbeitsmaschine (1) nach einem der Ansprüche 4 bis 6,
**dadurch gekennzeichnet,**
- **dass** die Einstellvorrichtung (6) dazu vorgesehen und eingerichtet ist, eine Fahrtrichtung (22) und/oder eine Fahrgeschwindigkeit der landwirtschaftlichen Arbeitsmaschine (1) zu ermitteln, und
- **dass** die Einstellvorrichtung (6) dazu vorgesehen und eingerichtet ist, die nächstliegende vorgegebene Fahrspur (7, 8, 9, 10) in Abhängigkeit der ermittelten Fahrtrichtung (22) und/oder der ermittelten Fahrgeschwindigkeit zu ermitteln.

8. Landwirtschaftliche Arbeitsmaschine (1) nach einem der Ansprüche 4 bis 7,
**dadurch gekennzeichnet,**
**dass** die Einstellvorrichtung (6) dazu vorgesehen und eingerichtet ist, die nächstliegende vorgegebene Fahrspur (7, 8, 9, 10) in Abhängigkeit der satellitenbasierter Positionsinformation zu ermitteln.

9. Landwirtschaftliche Arbeitsmaschine (1) nach einem der Ansprüche 4 bis 8,
**dadurch gekennzeichnet,**
**dass** die Einstellvorrichtung (6) dazu vorgesehen und eingerichtet ist, nach dem Aktivieren der automatischen Lenkung bezüglich der vorgegebenen Fahrspuren (7, 8, 9, 10) zu ermitteln, welche dieser vorgegebenen Fahrspuren (7, 8, 9, 10) von der landwirtschaftlichen Arbeitsmaschine (1) noch nicht befahren wurden, und die landwirtschaftliche Arbeitsmaschine (1) derart einzustellen, dass die landwirtschaftliche Arbeitsmaschine (1) entlang dieser noch nicht befahrenen vorgegebenen Fahrspuren (7, 8, 9, 10) entlangfährt.

10. Landwirtschaftliche Arbeitsmaschine (1) nach einem der Ansprüche 4 bis 9,
**dadurch gekennzeichnet,**
**dass** die Einstellvorrichtung (6) dazu vorgesehen und eingerichtet ist, nach dem Aktivieren der automatischen Lenkung eine nächstliegende vorgegebene Fahrspur (7, 8, 9, 10) in Abhängigkeit von Feldgrenzen (25) des landwirtschaftlichen Feld (2) zu ermitteln.

11. Landwirtschaftliche Arbeitsmaschine (1) nach einem der Ansprüche 4 bis 10,
**dadurch gekennzeichnet,**
**dass** die Einstellvorrichtung (6) dazu vorgesehen und eingerichtet ist, nach dem Aktivieren der automatischen Lenkung eine nächstliegende vorgegebene gerade Fahrspur (7, 8, 9) in Abhängigkeit von Feldgrenzen (25) des landwirtschaftlichen Feld (2) zu ermitteln.

12. Landwirtschaftliche Arbeitsmaschine (1) nach einem der Ansprüche 4 bis 11,
**dadurch gekennzeichnet,**
- **dass** das landwirtschaftlichen Feld (2) wenigstens einen Feldbereich (24) und wenigstens einen Vorgewendebereich (23) aufweist,
- wobei die vorgegebenen Fahrspuren (7) wenigstens eine wenigstens eine Fahrspur (8, 9) im Feldbereich (24) und/oder wenigstens eine Vorgewendefahrspur (10) im Vorgewendebereich (23) aufweisen.

13. Landwirtschaftliche Arbeitsmaschine (1) nach einem der vorhergehenden Ansprüche,
**dadurch gekennzeichnet,**
- **dass** die landwirtschaftliche Arbeitsmaschine (1) ein selbstfahrender Mähdrescher ist, oder
- **dass** die landwirtschaftliche Arbeitsmaschine (1) ein selbstfahrender Feldhäcksler ist, oder
- **dass** die landwirtschaftliche Arbeitsmaschine (1) ein Traktor ist.

14. Einstellungstechnische Verwendung eines Lenkradberührungssignals, welches mittels einer Sensorvorrichtung (5) einer landwirtschaftlichen Arbeitsmaschine (1) nach einem der vorhergehenden Ansprüche erzeugt wurde, um eine automatische satellitenbasierte Lenkung dieser landwirtschaftlichen Arbeitsmaschine (1) zu aktivieren, falls gemäß dem Lenkradberührungssignal ein Lenkrad (3) der landwirtschaftlichen Arbeitsmaschine (1) unberührt ist.

## Claims

1. Agricultural work machine (1) for agricultural use in an agricultural field (2),
- having a steering wheel (3) for a driver (4) for manually steering the agricultural work machine (1),
- wherein the agricultural work machine (1) has at least one sensor device (5) which is provided and configured to determine whether the driver (4) is touching the steering wheel (3) and to generate a steering wheel contact signal in this respect, and
- wherein the agricultural work machine (1) has an adjusting device (6) which is provided and configured to activate automatic steering of the agricultural work machine (1) depending on the steering wheel contact signal of the sensor device (5) if the driver (4) is not touching the steering wheel (3) according to the steering wheel contact signal, **characterized in that**
the sensor device (5) has at least one induction sensor.

2. Agricultural work machine (1) according to Claim 1, **characterized**
**in that** the adjusting device (6) is provided and configured to deactivate the automatic steering when the driver (4) is touching the steering wheel (3) according to the steering wheel contact signal.

3. Agricultural work machine (1) according to one of the preceding claims,
**characterized**
**in that** the sensor device (5) is arranged on and/or in the steering wheel (3).

4. Agricultural work machine (1) according to one of the preceding claims,
**characterized**
**in that** the adjusting device (6) is provided and configured to adjust the agricultural work machine (1) during the automatic steering depending on satellite-based position information in such a way that the agricultural work machine (1) travels along predefined lanes (7, 8, 9, 10) within the agricultural field (2).

5. Agricultural work machine (1) according to one of the preceding claims,
**characterized**
**in that** the adjusting device (6) is provided and configured, after activating the automatic steering, to determine the nearest predefined lane (7, 8, 9, 10) and to adjust the agricultural work machine (1) in such a way that the agricultural work machine (1) approaches this determined nearest predefined lane (7, 8, 9, 10) and then travels along this determined nearest predefined lane (7, 8, 9, 10).

6. Agricultural work machine (1) according to Claim 4 or 5,
**characterized**
**in that** the adjusting device (6) is provided and configured to adjust the agricultural work machine (1) in such a way that the agricultural work machine (1) approaches the determined nearest predefined lane (7, 8, 9, 10) along an agriculturally permissible path and/or with a minimum path length.

7. Agricultural work machine (1) according to one of Claims 4 to 6,
**characterized**
- **in that** the adjusting device (6) is provided and configured to determine a direction of travel (22) and/or a speed of travel of the agricultural work machine (1), and
- **in that** the adjusting device (6) is provided and configured to determine the nearest predefined lane (7, 8, 9, 10) depending on the determined direction of travel (22) and/or the determined speed of travel.

8. Agricultural work machine (1) according to one of Claims 4 to 7,
**characterized**
**in that** the adjusting device (6) is provided and configured to determine the nearest predefined lane (7, 8, 9, 10) depending on the satellite-based position information.

9. Agricultural work machine (1) according to one of Claims 4 to 8,
**characterized**
**in that** the adjusting device (6) is provided and configured, after activating the automatic steering with respect to the predefined lanes (7, 8, 9, 10), to determine which of these predefined lanes (7, 8, 9, 10) have not yet been accessed by the agricultural work machine (1), and to adjust the agricultural work machine (1) in such a way that the agricultural work machine (1) travels along these predefined lanes (7, 8, 9, 10) that have not yet been accessed.

10. Agricultural work machine (1) according to one of Claims 4 to 9,
**characterized**
**in that** the adjusting device (6) is provided and configured, after activating the automatic steering, to determine a nearest predefined lane (7, 8, 9, 10) depending on field boundaries (25) of the agricultural field (2).

11. Agricultural work machine (1) according to one of Claims 4 to 10,
**characterized**
**in that** the adjusting device (6) is provided and configured, after activating the automatic steering, to determine a nearest predefined straight lane (7, 8, 9) depending on field boundaries (25) of the agricultural field (2).

12. Agricultural work machine (1) according to one of Claims 4 to 11,
**characterized**
- **in that** the agricultural field (2) has at least one field region (24) and at least one headland region (23),
- wherein the predefined lanes (7) have at least one lane (8, 9) in the field region (24) and/or at least one headland lane (10) in the headland region (23).

13. Agricultural work machine (1) according to one of the preceding claims,
**characterized**
- **in that** the agricultural work machine (1) is a self-propelled combine harvester, or
- **in that** the agricultural work machine (1) is a self-propelled forage harvester, or
- **in that** the agricultural work machine (1) is a tractor.

14. Use, for adjustment purposes, of a steering wheel contact signal, which was generated by means of a sensor device (5) of an agricultural work machine (1) according to one of the preceding claims, to activate automatic satellite-based steering of this agricultural work machine (1) if a driver is not touching a steering wheel (3) of the agricultural work machine (1) according to the steering wheel contact signal.

## Revendications

1. Machine agricole (1) destinée à une utilisation agricole dans un champ agricole (2),
- comportant un volant (3) pour un conducteur (4) en vue de la conduite manuelle de la machine agricole (1),
- la machine agricole (1) présentant au moins un dispositif à capteur (5) qui est prévu et conçu pour déterminer si le conducteur (4) touche le volant (3) et pour générer à cet égard un signal de contact de volant,
- la machine agricole (1) présentant un dispositif de réglage (6) qui est prévu et conçu pour activer une conduite automatique de la machine agricole (1), en fonction du signal de contact de volant du dispositif à capteur (5) si, conformément au signal de contact de volant, le volant (3) n'est pas touché par le conducteur (4),
**caractérisé en ce que** le dispositif à capteur (5) présente au moins un capteur à induction.

2. Machine agricole (1) selon la revendication 1,
**caractérisée en ce que**
le dispositif de réglage (6) est prévu et conçu pour désactiver la conduite automatique si, conformément au signal de contact de volant, le volant (3) est touché par le conducteur (4).

3. Machine agricole (1) selon une des revendications précédentes,
**caractérisée en ce que**
le dispositif à capteur (5) est installé sur et/ou dans le volant (3).

4. Machine agricole (1) selon une des revendications précédentes,
**caractérisée en ce que**
le dispositif de réglage (6) est prévu et conçu pour régler la machine agricole (1) pendant la conduite automatique, en fonction d'informations de position basées sur satellite, de manière à ce que la machine agricole (1) se déplace le long de voies de passage (7, 8, 9, 10) prédéfinies à l'intérieur du champ agricole (2).

5. Machine agricole (1) selon une des revendications précédentes,
**caractérisée en ce que**
le dispositif de réglage (6) est prévu et conçu pour déterminer, après l'activation de la conduite automatique, une voie de passage (7, 8, 9, 10) prédéfinie la plus proche et pour régler la machine agricole (1) de manière à ce que la machine agricole (1) vise cette voie de passage (7, 8, 9, 10) prédéfinie la plus proche, qui a été déterminée, et se déplace ensuite le long de cette voie de passage (7, 8, 9, 10) prédéfinie la plus proche déterminée.

6. Machine agricole (1) selon la revendication 4 ou 5,
**caractérisée en ce que**
le dispositif de réglage (6) est prévu et conçu pour régler la machine agricole (1) de manière à ce que la machine agricole (1) vise la voie de passage (7, 8, 9, 10) prédéfinie la plus proche déterminée, le long d'un trajet de déplacement admissible sur le plan technique agricole et/ou la vise avec une longueur de trajet de déplacement minimale.

7. Machine agricole (1) selon une des revendications 4 à 6,
**caractérisée en ce que**
- le dispositif de réglage (6) est prévu et conçu pour déterminer une direction de déplacement (22) et/ou une vitesse de déplacement de la machine agricole (1), et/ou
- **en ce que** le dispositif de réglage (6) est prévu et conçu pour déterminer la voie de passage (7, 8, 9, 10) prédéfinie la plus proche, en fonction de la direction de déplacement déterminée et/ou de la vitesse de déplacement déterminée.

8. Machine agricole (1) selon une des revendications 4 à 7,
**caractérisée en ce que**
le dispositif de réglage (6) est prévu et conçu pour déterminer la voie de passage (7, 8, 9, 10) prédéfinie la plus proche, en fonction de l'information de position basée sur satellite.

9. Machine agricole (1) selon une des revendications 4 à 8,
**caractérisée en ce que**
le dispositif de réglage (6) est prévu et conçu pour déterminer, après l'activation de la conduite automatique, par rapport aux voies de passage (7, 8, 9, 10) prédéfinies, laquelle de ces voies de passage (7, 8, 9, 10) prédéfinies n'a pas encore été empruntée par la machine agricole (1), et pour régler la machine agricole (1) de manière à ce que la machine agricole (1) se déplace le long de ces voies de passage (7, 8, 9, 10) prédéfinies pas encore empruntées.

10. Machine agricole (1) selon une des revendications 4 à 9,
**caractérisée en ce que**
le dispositif de réglage (6) est prévu et conçu pour déterminer, après l'activation de la conduite automatique, une voie de passage (7, 8, 9, 10) prédéfinie la plus proche, en fonction de limites de champ (25) du champ agricole (2).

11. Machine agricole (1) selon une des revendications 4 à 10,
**caractérisée en ce que**
le dispositif de réglage (6) est prévu et conçu pour déterminer, après l'activation de la conduite automatique, une voie de passage (7, 8, 9) prédéfinie rectiligne la plus proche, en fonction de limites de champ (25) du champ agricole (2).

12. Machine agricole (1) selon une des revendications 4 à 11,
**caractérisée en ce que**
- le champ agricole (2) comporte au moins une zone de champ (24) et au moins une zone de tournières (23),
- les voies de passage (7) prédéfinies comportant au moins une au moins une voie de passage (8, 9) dans la zone de champ (8, 9) dans la zone de champ (24) et/ou au moins une voie de passage de tournière (10) dans la zone de tournières (23).

13. Machine agricole (1) selon une des revendications précédentes,
**caractérisée en ce que**
- la machine agricole (1) est une moissonneuse-batteuse automotrice, ou
- **en ce que** la machine agricole (1) est une récolteuse-hacheuse-chargeuse automotrice, ou
- **en ce que** la machine agricole (1) est un tracteur.

14. Utilisation sur le plan de la technique de réglage d'un signal de contact du volant qui a été généré au moyen d'un dispositif à capteur (5) d'une machine agricole (1) selon une des revendications précédentes, aux fins d'activer une conduite automatique basée sur satellite de ladite machine agricole (1), dans le cas où, conformément au signal de contact de volant, un volant (3) de la machine agricole (1) n'est pas soumis à un contact.
